# EUROPÄISCHE PATENTSCHRIFT

(11) **EP 0 389 602 B1**
(45) Veröffentlichungstag und Bekanntmachung des Hinweises auf die Patenterteilung: **03.05.1995**
(21) Anmeldenummer: 89910412.9
(22) Anmeldetag: 29.09.1989
(51) Int. Cl.: B29B 11/08, B29C 45/20, B29C 49/00, B65D 1/00

(54) **VERFAHREN UND ANGUSS-SYSTEM ZUM SPRITZGIESSEN VON FORMLINGEN SOWIE FORMLING UND VERWENDUNG VON SOLCHEN FORMLINGEN**
PROCESS AND DEVICE FOR INJECTION MOULDING OF PREFORMS, PREFORMS AND THEIR USE
PROCEDE ET SYSTEME DE MOULAGE PAR INJECTION D'EBAUCHES, EBAUCHES ET LEUR UTILISATION

(30) Priorität: 05.10.1988 DE 3833868
(43) Veröffentlichungstag der Anmeldung: 03.10.1990
(73) Patentinhaber: OTTO HOFSTETTER AG, 8730 Uznach (CH)
(72) Erfinder: HOFSTETTER, Otto, CH-8730 Uznach (CH); FERNANDEZ, Luis, CH-8730 Uznach (CH)
(74) Vertreter: Ritscher, Thomas, Dr.
(86) Internationale Anmeldenummer: CH8900178
(87) Internationale Veröffentlichungsnummer: WO9003876

(56) Entgegenhaltungen:
- EP-A- 0 099 089
- EP-A- 0 106 922
- DE-A- 3 116 313
- DE-A- 3 431 173
- FR-A- 2 394 231
- GB-A- 2 069 924

## Beschreibung

Die vorliegende Erfindung betrifft ein Verfahren zum Spritzgiessen von zum Blasrecken geeigneten Vorformlingen, bei welchem eine auf eine Temperatur T_{H} im Bereich der Kristallit-Schmelztemperatur T_{M} erhitzte PET-artige Kunststoff-Formmasse auf eine Temperatur T_{T} im Bereich der Glasübergangstemperatur T_{G} abgeschreckt wird, indem die erhitzte Kunststoff-Formmasse aus einer heissen Spritzdüse durch eine Angussöffnung in eine kalte Form gepresst wird, sowie ein Anguss-System zum Spritzgiessen von zum Blasrecken geeigneten Vorformlingen, aus abgeschreckten PET-artigen Kunststoff-Formmassen, mit einer heizbaren Düse, bestehend aus Düsenkörper und Düsenspitze, deren Düsenraum in Fliessrichtung einen ersten zylinderförmigen Abschnitt und einen daran anschliessenden kegelförmigen Abschnitt aufweist, welche Düsenspitze eine Düsenmündung aufweist, mit einem einen Formraum bildenden kühlbaren Formkörper, bestehend aus Aussenform und Innenform, welche Aussenform eine Angussöffnung aufweist, wobei die Düsenmündung und die Angussöffnung im wesentlichen miteinander fluchten, wobei die Düse im Innen des Düsenkörpers einen festen, zentrisch angeordneten Düsenkern mit einem sich kegelförmig verjüngenden Abschnitt aufweist und mindestens die Düsenspitze als auch der Düsenkern eine hohe Wärmeleitfähigkeit aufweisen und mit Wärmequellen verbunden sind, mindestens der in unmittelbarer Nähe der Angussöffnung liegende Bereich der Aussenform eine hohe Wärmeleitfähigkeit aufweist und mit Wärmesenken verbunden ist, und die Angussöffnung sich zur Aussenformfläche der Aussenform aufweitet, sowie einen nach diesem Verfahren hergestellten Vorformling.

PET-Material (Polyethylenterephthalat) ist bezüglich Verarbeitung und insbesondere Verarbeitungstemperatur sehr heikel. Ist seine Verarbeitungstemperatur zu tief, so entstehen kristalline Zonen, welche in den Formlingen und insbesondere beim Blasrecken von Vorformlingen zu Schlierenbildung Anlass geben. Ist die Temperatur andererseits zu hoch, so bildet sich ein zu hoher Anteil Acetaldehyd, der, insbesondere bei Verwendung von PET-blasgereckten Behältnissen für geschmacklich heikle Lebensmittelprodukte, wie für Mineralwasser, eine unzulässige Geschmacksbeeinträchtigung solcher Produkte bewirkt.

Im folgenden soll auf die dem Fachmann bekannten besonderen Eigenheiten von kristallisierbaren Kunststoff-Formmassen am Beispiel des PET eingegangen werden, soweit sie für die vorliegende Erfindung wesentlich sind, um die Probleme bei der Verarbeitung dieses Materials deutlich zu machen.

PET ist ein thermoplastisch verarbeitbares Polymer, welches bei Raumtemperatur sehr hart und steif ist. Eine bevorzugte Verwendung findet PET deshalb in der Herstellung von dünnwandigen Flaschen. Es gibt im wesentlichen drei Grundarten von Polymeren: a) amorphe Polymere, mit einer vollständig zufällig verteilten Anordnung der Moleküle, wie PVC oder auch Glas, welche sich dadurch charakterisieren lassen, dass sie mit zunehmender Temperatur immer weicher und weicher werden, b) sogenannte "kristalline" Polymere, deren Moleküle in hoher Ordnung ausgerichtet sind und deshalb auch einen relativ scharfen Schmelzpunkt aufweisen, wie z.B. Polybuthylenterephthalat, lineare Polyethylene oder auch Eis, c) sogenannte "kristallisierbare" Polymere, welche bei Zimmertemperatur entweder amorph oder kristallisiert vorliegen können und bei welchen der Grad der Kristallinität kontrolliert werden kann. Zu diesen Materialien gehört PET.

Typisch für dieses Material ist, dass es nur in einem bestimmten Temperaturbereich "Kristallinität" herausbilden kann, welche dann zu milchigen Trübungen führt. Dieser Temperaturbereich wird an seiner unteren Grenze von der Minimumtemperatur für die Kristallisation durch Erwärmen T_{CH} und an seiner oberen Grenze durch die Maximumtemperatur für die Kristallisation durch Abkühlen T_{CC} definiert und befindet sich zwischen der Glasübergangstemperatur T_{G} und der Schmelztemperatur T_{M}. Dabei liegt die Glasübergangstemperatur T_{G} typischerweise bei ca. 80°C, die Schmelztemperatur T_{M} bei 250° bis 255°C. Die Geschwindigkeit mit der sich die Kristallinität herausbildet ist temperaturabhängig und sowohl in der Nähe der Minimumtemperatur T_{CH} als auch nahe der Maximumtemperatur T_{CC} sehr klein.

Eine eingehende Beschreibung des Verhaltens vom PET findet sich in "A Layman's Guide to PET Chemistry and Processing", Edward E. Denison; 4th Annual International Conference on Oriented Plastic Containers; March 25, 1981.

Beim Giessen von PET-Formlingen und insbesondere -Vorformlingen für das nachmalige Blasrecken ist es üblich, mittels einer Düse das durch Erhitzen im zulässigen Temperaturbereich druckförderfähig gemachte PET-Material, durch eine Angussöffnung in der Aussenform, in eine Form zu pressen. Ist die Form gefüllt, so wird üblicherweise die Düse bzw. der Uebertritt zwischen Düse und Form mittels mechanisch bewegter Organe, insbesondere mittels einer Düsennadel, verschlossen. Darnach wird der Formling, üblicherweise erst mit der Gegenform von der Aussenform und der Angussöffnung abgehoben. Das Verschliessen der Angussöffnung bzw. des Ueberganges zwischen Düse und Form, mittels der erwähnten mechanisch bewegten Organe in der Düse, nämlich üblicherweise der Düsennadel, bewirkt, dass in der Düse auch nach Beendigung des Füllvorganges unter Druck stehendes PET-Material, nicht nachfliessen kann. Eine solche Vorrichtung ist beispielsweise in der US-A-4'213'751 beschrieben.

Allerdings ist das Vorsehen derartiger, mechanisch in der Düse bewegbarer Schliessorgane, der Düsennadel, konstruktiv aufwendig, muss doch ein solches Organ, gerade wegen des heiklen zu verarbeitenden Materials so ausgelegt sein, dass, wie durch zusätzliche Reibung, nicht eine unzulässige Mehrbeanspruchung des in die Form eingepressten PET-Materials erfolgt, was zur Erhöhung des Acetaldehydanteils führen kann und es muss weiter sichergestellt werden, dass auch für lange Standzeiten eine präzise Führung der Düsannadel realisiert wird. Insbesondere wird die Nadelspitze beim Verschliessen der Angussöffnung stark abgekühlt und fördert damit die Bildung von milchigen Trübungen im PET-Material.

Um solche Nachteile von Düsen mit mechanisch bewegten Schliessorganen zu umgehen, wurden Versuche unternommen, derartige Anguss-Systeme "nadellos" auszubilden.

Nadellose Anguss-Systeme sind in der Kunststoff-verarbeitenden Industrie seit längerem bekannt und bspw. in der GB-2'069'924 dargestellt. Bei dem in dieser Schrift beschriebenem Blasreck-Verfahren zur Herstellung von Polypropylen-Flaschen und der dazugehörigen Konstruktion wird die Schmelzentemperatur des zu verarbeitenden Polypropylens je nach Bedarf zwischen 255°C und 370°C variiert. Eine Massnahme, die bei der Verarbeitung von PET nicht angewendet werden kann, da eine Schmelze aus PET bei erhöhter Temperatur Acetaldehyd in für Lebensmittelverpackungen unzulässigen Mengen anreichert und sehr rasch Verbrennungserscheinungen zeigt. Bei der in dieser GB-Schrift offenbarten Konstruktion wird die Extruderspitze von Zeit zu Zeit vom Formwerkzeug getrennt, um den ausfliessenden Kunststoff auf seine Konsistenz und Durchsichtigkeit zu prüfen resp. die Temperatur des Extruders neu einzustellen. Solche Vorrichtungen eignen sich nicht für den industriellen Einsatz, insbesondere für die Massenproduktion von Vorformlingen aus PET.

Es wurde mit der DE-31'16'313 auch schon vorgeschlagen, ein Anguss-System zu schaffen, bei welchem zur Erzielung einer gleichförmigeren Temperaturverteilung, im Bereich der Einspritzöffnung eine feststehende Nadel angeordnet ist, mit welcher zusätzliche Wärme in den Bereich der Einspritzöffnung geleitet werden kann und die Temperatur der Schmelze so gewählt wird, dass die nach Füllung der Form im Bereich der Einspritzöffnung erstarrte Schmelze nur einen kleinen Propfen bildet, welcher beim folgenden Füllvorgang ohne grossen Zusatzdruck in die geleerte Form ausgestossen werden kann. Leider erweist sich eine solche Konstruktion für die Verarbeitung von PET als unbrauchbar, da auskristallisierte Propfen aus PET milchig trüb und spröd sind und damit die Herstellung von glaskaren Vorformlingen resp. das Blasrecken desselben verunmöglichen. Darüberhinaus führt die zur Reduktion des Propfens zusätzlich zugeführte Wärme bei PET oder PET-artigen Formmassen zur Bildung von Acetaldehyd resp. zur Zersetzung der Formmasse.

Bis anhin deshalb mussten bei der Verarbeitung von PET Anguss-Systeme mit beweglichen Verschlussnadeln verwendet werden wie sie bspw. aus der obengenannten US-4'213'751 bekannt sind, da mit keinem der bekannten nadellosen Systeme befriedigende Resultate für den industriellen Einsatz erzielt werden konnten. Insbesondere zieht beim Abheben des Formlings von der Aussenform letzterer meistens zentral zur Angussöffnung, einen Faden zur Düse, welcher nach Kristallisation und Bruch in der Form verbleibt und erst entfernt werden muss, bevor ein weiterer Formling gegossen werden kann. Im weiteren mussten die Angusszapfen an den Formlingen relativ lang ausgebildet werden, um an der üblicherweise gekühlten Aussenform eine relativ lange Zone zu bilden, entlang welcher sich das in die Form eingefüllte PET-Material kristallin verfestigen konnte, um dann bei Entfernen der Form allenfalls an einer SOLL-Bruchstelle für diesen Zapfen, zu brechen. Das Verbleiben derartiger, relativ langer Angusszapfen führt dazu, dass diese in einem separaten Arbeitsgang abgetrennt werden müssen, beispielsweise bevor Vorformlinge nachmals blasgereckt werden.

Die vorliegende Erfindung setzt sich zum Ziel, ein Verfahren eingangs genannter Art zu schaffen, welches die genannten Nachteile behebt.

Zu diesem Zweck zeichnet es sich nach dem Wortlaut von Anspruch 1 aus.

Darnach wird das Material in einem schlauchförmigen Strom in die Form gepresst, womit im zentralen, primär zum Fadenziehen neigenden Bereich, strukturell der vormals in bekannter Art und Weise kreisscheibenförmige Materialstrom zur Form unterbunden wird. Druckentlastet wird dabei das Material in der Düse, nach dem Füllen der Form, damit bei Entfernen des Formlings mit seinem nun büchsenförmig ausgebildeten Angusszapfen nicht Material aus der Düse durch die Angussöffnung in die Form nachfliesst.

Um dabei ein rasches Anhärten des Formlings sicherzustellen und dabei gleichzeitig zu verhindern, dass düsenseitig verbleibendes PET-Material, für das Giessen eines nächsten Formlings nicht ebenfalls anhärtet, wird gemäss Wortlaut von Anspruch 2 vorgegangen.

Bei nach üblichen Giessverfahren hergestellten PET-Formlingen, wobei düsenseitig eine axial bewegliche Nadel zum Schliessen der Angussöffnung sowie zum Abtrennen des düsenseitigen Materials vom nachmals zu entfernenden Angusszapfen am Formling vorgesehen ist, entsteht am Formling im Angussbereich, ein kristalliner, koaxial zur Angussöffnung bzw. zum Angusszapfen sich durch die Formlingswandung erstreckender kristalliner Bereich. Dies ist erkenntlich, beispielsweise an einer von übrigen Wandabschnitten des Formlings abweichenden Lichttransmission in diesem Bereich: Dieser Bereich erscheint bei ansonst klarsichtiger Wandung milchig.

Bei Vorgehen nach dem erfindungsgemässen Verfahren wird erstmals erreicht, dass auch der Wandungsbereich des Formlings, unmittelbar im Angussbereich liegend, nicht kristallin wird, d.h. es wird bei Vorgehen nach dem erfindungsgemässen Verfahren ein spritzgegossener Formling realisiert, dessen Wandung auch im Angussbereich im wesentlichen homogen und deshalb klarsichtig ist.

Dies hat den Vorteil, dass bei nachmaliger Verarbeitung, wie bei nachmaligem Blasrecken so hergestellter Vorformlinge, beispielsweise zur Erzeugung druckbelasteter Behältnisse, dieser Angussbereich keine inhomogene Zone bildet, welche sich bei der genannten Weiterverarbeitung anders als die übrigen Wandungsbereiche verhält und beispielsweise an einem fertiggestellten Behältnis eine auf Druckbeanspruchung besonders gefährdete Zone bildet.

Im weiteren wird durch das erfindungsgemässe Vorgehen ein spritzgegossener Formling erzeugt, dessen Angusszapfen büchsenartig ist, wobei es realisierbar wird, dessen Axialausdehnung, vorzugsweise im wesentlichen gleich oder kleiner als sein Aussendurchmesser, auszubilden. Damit erübrigt sich in manchen Anwendungsfällen eine nachmalige Abtrennoperation für diesen Angusszapfen, auch wenn der Formling ein Vorformling für nachmaliges Blasrecken ist.

Ein erfindungsgemässes Anguss-System obgenannter Gattung zeichnet sich im weiteren nach dem Wortlaut von Anspruch 5 aus.

Dadurch, dass der Strömungskanalquerschnitt von Düse in die Aussenform mindestens abschnittsweise ringförmig ist und dort hierfür ein zentrischer, stationärer Kern vorgesehen ist, wird im obgenannten Sinne erreicht, dass im speziell zum Fadenziehen neigenden Zentralbereich gar kein Materialstrom vorhanden ist.

Bevorzugterweise ragt der Kern bis in den Uebergangsbereich zwischen Düse und Aussenform, womit sich der Materialstrom erst unmittelbar vor Ausfliessen in die Form vom zentralen Kern löst und sich erst unmittelbar auf der Höhe der Aussenformfläche zu einem einheitlichen Strom vereinigt und in die Form einfliesst.

Im weiteren wird durch die wegen des stationären Kerns büchsenartig, relativ dünnwandige Ausbildung des Angusszapfens am Formling erreicht, dass ein Abbrechen des Zapfens bei Ablösen des Formlings mit dem Angusszapfen leichter erfolgen kann, als wenn der Angusszapfen in bekannter Art und Weise als Vollzapfen ausgebildet ist.

Um im weiteren den Düsenausmündungsbereich, worin das PET-Material kontinuierlich fliessfähig gehalten wird, thermisch vom Angussbereich in der Aussenform zu entkoppeln, worin bei jedem Formlings-Herstellzyklus der Angusszapfen vor Entfernen des Formlings erhärten soll, ist zwischen Aussenform und Düse ein mit dem Strömungskanal kommunizierender, sich im wesentlichen radial nach aussen erstreckender Ringspalt vorgesehen, welcher durch PET-Material mindestens teilweise gefüllt wird, das dann eine zusätzliche thermische Entkopplung zwischen Aussenform und Düsenmündung sicherstellt.

Bei einer bevorzugten Ausführungsvariante wird der Strömungskanal-Querschnitt auf Höhe des stationär vorgesehenen zentralen Kerns kreisringförmig ausgebildet.

Um im weiteren sicherzustellen, dass formlingsseitig die Angussbüchse relativ rasch härtet, dabei aber düsenseitig das in der Düse verbleibende PET-Material fliessfähig bleibt, wird als Wärmequelle der Heissläuferblock und/oder eine speziell dafür vorgesehene Heizung des Werkzeuges verwendet, womit die Düse und insbesondere der zentrale Kern thermisch gut leitend verbunden wird, während die Aussenform, und damit die Wandung der Angussöffnung mit einer Kühlung als Wärmesenke, bevorzugterweise einer Wasserkühlung, thermisch gut leitend gekoppelt wird.

Eine weitere erfindungsgemässe Massnahme liegt in der geometrischen Ausbildung des Anguss-Systems, insbesondere in der Aufweitung der Angussöffnung zur Aussenformfläche der Aussenform.

Die Erfindung wird anschliessend anhand der Figuren erläutert.

Es zeigen:
- Fig. 1a: schematisch einen Längsschnitt durch ein bekanntes Anguss-System mit beweglicher Düsennadel in Giessposition,
- Fig. 1b: die Anordnung gemäss Fig. 1a bei Entfernen des gegossenen Formlings mit Angusszapfen,
- Fig. 2a: in schematischer Darstellung gemäss Fig. 1 ein erfindugsgemässes Anguss-System in Giessposition,
- Fig. 2b: das erfindungsgemässe Anguss-System bei Entfernen des Formlings mit Angussbüchse,
- Fig. 3a: eine nach dem schematisch in Fig. 1 dargestellten bekannten Verfahren hergestellte Formlingspartie mit Angusszapfen,
- Fig. 3b: einen Ausschnitt aus einem nach dem erfindungsgemässen Vorgehen gemäss Fig. 2 hergestellten Formling mit Angussbüchse,
- Fig. 4: eine bevorzugte Ausführungsvariante eines erfindungsgemässen Anguss-Systems.

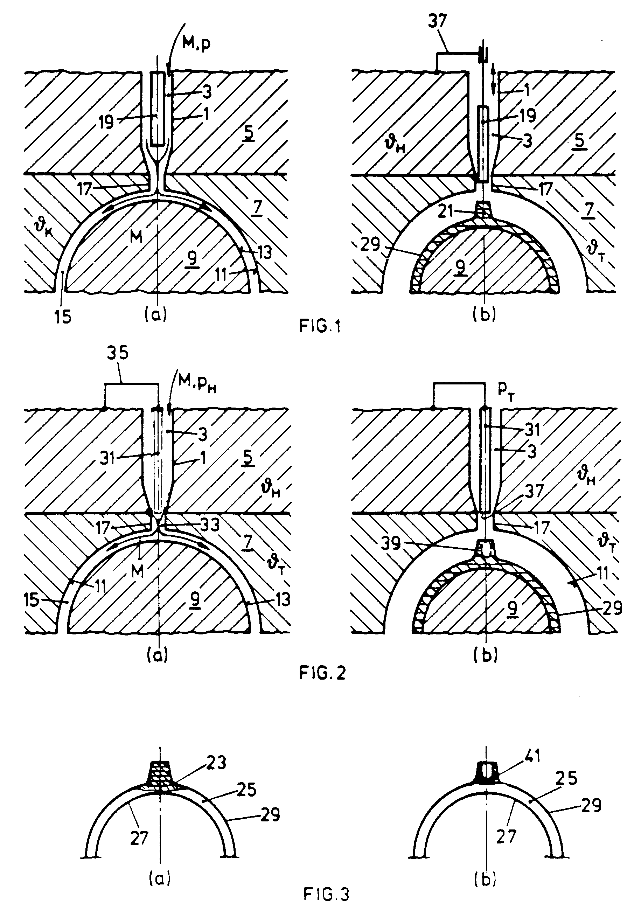

In Fig. 1 ist ein bekanntes Anguss-System schematisch dargestellt. Ein solches Anguss-System umfasst eine Düse 1 mit einem Düsenraum 3. Der Düsenraum 3 kommuniziert mit Zuleitungen eines hier nicht dargestellten Heissläuferblocks, durch welchen, wie mit dem Pfeil M dargestellt, in fliessfähigem Zustand erhitztes PET-Material unter Druck zugefördert wird. Der Düsenblock 5 mit der Düse 1 ist mit einer Aussenform 7 fest verbunden, mit welcher zur Herstellung von Vorformlingen, als Innenform ein Kern 9 zusammenarbeitet, wobei zwischen einer Aussenformfläche 11 an der Aussenform 7 und der Innenformfläche 13 am Kern 9 ein Formraum 15 zur Herstellung des Formlings bzw. Vorformlings freiliegt. Der Düsenraum 3 kommuniziert über eine Angussöffnung 17, welche an der Aussenformfläche 11 ausmündet, mit dem Formraum 15. Koaxial ist im Düsenraum 3 eine axial verschiebliche Düsennadel 19 vorgesehen. Sie wird durch hier nicht dargestellte Antriebsorgane gesteuert axial bewegt. In der in Fig. 1a dargestellten Konfiguration ist die Düsennadel 19 rückgezogen und gibt den Durchgang vom Düsenraum 3 über Angussöffnung 17 in den Formraum 15 frei. In dieser Giessposition wird das fliessfähig erhitzte PET-Material durch den Düsenraum 3 durchgepresst, schliesslich in den Formraum 15, wobei sich das allseits entlang der rückgeholten Düsennadel 19 vorfliessende Material im Bereich der Angussöffnung 17 zu einem geschlossenen zylinderförmigen Strom vereinigt.

Ist der Formraum 15 gefüllt, so wird gemäss Fig. 1b die Düsennadel 19 vorgetrieben und schliesst den Durchtritt zwischen Düse und Angussöffnung 17. Die Aussenform 7 ist dabei üblicherweise auf tiefer Temperatur ϑ_{T} gehalten, während der Düsenblock 5 und damit der Ausmündungsbereich der Düse auf hoher Temperatur ϑ_{H} gehalten werden. Nach Vorschieben der Düsennadel 19 gemäss Fig. 1b wird das düsenraumseitige Material von dem in den Formraum 15 eingepressten abgetrennt, und es kristallisiert. Wie aus Fig. 1b ersichtlich, wird nach Schliessen der Düsennadel 19 der Kern 9 mit dem Formling 29 und dem angeformten Angusszapfen 21 von der Aussenformfläche 11 der Aussenform 7 abgehoben und anschliessend (nicht dargestellt) der Formling 29 vom Kern 9 gelöst.

In Fig. 2a und 2b sind die analogen Verhältnisse gemäss Fig. 1a und 1b nun aber nach dem erfindungsgemässen Verfahren bzw. an einem erfindungsgemässen Anguss-System dargestellt. Sich entsprechende Teile sind mit denselben Bezugszeichen wie in Fig. 1 bezeichnet. Anstatt einer axial verschieblichen Düsennadel 19 ist im Düsenraum 3 erfindungsgemäss ein stationärer Kern 31 koaxial vorgesehen und ragt in den Uebergangsbereich zwischen Düsenraum 3 und Angussöffnung 17 in der Aussenform 7. Bei Einpressen des fliessfähig erhitzten PET-Materials M vereinigt sich das allseits schlauchartig um den heissen stationären Kern 31 fliessende PET-Material erst unmittelbar vor der Ausmündung 33 der Angussöffnung 17 in die Aussenformfläche 11. Mit der schematisch dargestellten mechanischen Verbindung 35 ist im Unterschied zur beweglichen Verbindung 37 von Fig. 1b dargestellt, dass der Kern 31 bewegungsstarr mit der Düse 1 verbunden ist.

Während bei bekanntem Vorgehen gemäss Fig. 1 nach Füllen der Form 15 die Düsennadel 19 den Uebertritt von Düsenraum 3 zu Formraum 15 unterbindet und der Druck p im Düsenraum 3 aufrechterhalten werden kann, wird nach der vorliegenden Erfindung gemäss Fig. 2 nach Füllen der Form 15 der Druck p im Düsenraum 3 von einem Pressdruck p_{H} zum Nachpressen der Form 15, p_{H} auf einen wesentlich tieferen Rückhaltedruck p_{T} reduziert. Der Materialvorstrom wird nach Füllen der Form 15 und Reduzierung des Druckes p im Düsenraum 3 vom hohen p_{H} auf den tiefen Druck p_{T} unterbunden und das im Formraum 15 eingepresste PET-Material kühlt sich ab. Auch hier liegt die Aussenform 7 auf einer wesentlich tieferen Temperatur ϑ_{T} als die Temperatur ϑ_{H} der Düse 1. Im Bereich der Angussöffnung 17 ist wegen des auch heissen stationären Kerns 31, luvseitig seiner Stirnfläche 37 nun nicht ein Vollangusszapfen 21 entstanden, sondern eine Angussbüchse 39. Es zeigt sich insbesondere, dass die Formlingswandung 25 auch über den Angussbereich weitgehend homogen nicht kristallin ist, d.h. der Formling weist im Angussbereich keine materialstrukturelle Inhomogenitäten auf, die bei der Weiterbearbeitung eines Vorformlings, dessen anschliessender Belastung oder allenfalls bei der Weiterverwendung eines Formlings und dessen Belastung, zu Problemen führen können, wie zu Rissbildung bei Druckbelastung.

Gemäss Fig. 2a wird nach einer vorgegebenen Zeitspanne reduzierten Druckes p_{T} der Kern 9 zusammen mit dem Formling 29 nun mit der Angussbüchse 39, von der Aussenformfläche 11 und der Angussöffnung 17 abgehoben, wobei die relativ dünne Büchsenwandung 41 sich ohne weiteres von dem unter reduziertem Druck p_{T} liegenden fliessfähigen PET-Material löst, vermutlich auch durch die relataiv dünne Wandungsstärke der Büchsenwandung 41 unterstützt. Auch hier wird nun (nicht dargestellt) anschliessend der Kern 9 vom Formling 29 getrennt.

Das befürchtete Fadenziehen bei Abheben von Kern 9 mit Formling 29 von der Aussenformfläche 11 und der Angussöffnung 17 unterbleibt.

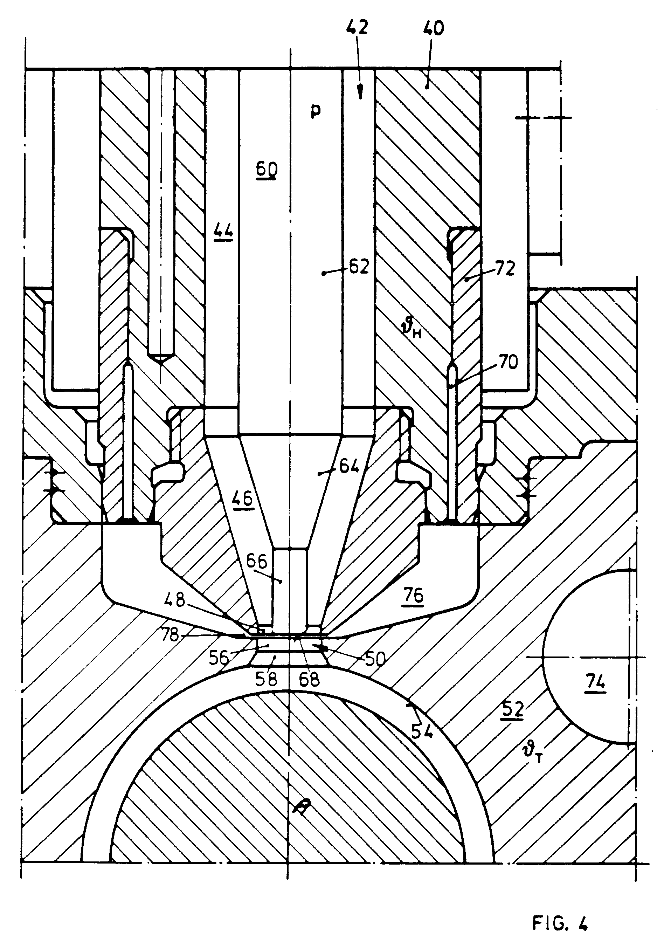

In Fig. 4 ist eine bevorzugte und erprobte Ausführungsform eines nach dem erfindungsgemässen Verfahren arbeitenden Anguss-Systems mit erfindungsgemässer Düse dargestellt. In einem Düsenkörper 40 aus hochwertigem Werkzeugstahl ist ein Düsenraum 42 vorgesehen. Dieser Düsenraum 42 weist in Fliessrichtung einen ersten, 10 mm Durchmesser aufweisenden Abschnitt 44 auf, der anschliessend in einen kegelförmigen Abschnitt 46 übergeht. Der kegelförmige Abschnitt 46 geht in einen kurzen, wiederum zylinderförmigen Abschnitt 48 mit 3,7 mm Durchmesser über, welcher nun in eine Angussöffnung 50 in einer Aussenform 52 mit Aussenformfläche 54 ausmündet. Die Angussöffnung 50 in der Aussenform 52 weist anschliessend an den zylindrischen Abschnitt 48 des Düsenmündungsbereiches erst einen 3,8 mm Durchmesser aufweisenden zylindrischen Abschnitt 56 auf und geht dann in einen sich kegelförmig ausweitenden Abschnitt 58 über, der schliesslich an der Aussenformfläche 54 ausmündet. In der erprobten Ausführungsform weist die Aussenformfläche 54 einen Durchmesser von 12 mm auf. Im Düsenraum 42 liegt, koaxial, ein stationärer, d.h. bezüglich des Düsenkörpers 40 starr befestigter Kern 60. Im Bereich des zylindrischen Abschnittes 44 des Düsenraumes 42 ist er ebenfalls zylinderförmig mit einem einen Durchmesser von 5,95 mm aufweisenden Abschnitt 62 ausgebildet. Im Bereich des Ueberganges von Zylinderfläche 44 in die Kegelfläche 46 geht er ebenfalls in einen kegelförmigen Abschnitt 64 über, wobei vorzugsweise Mantellinien der Kegelfläche 64 parallel zu Mantellinien der Kegelfläche 46 am Düsenkörper 40 sind. Die Kegelfläche 64 geht darnach in einen wiederum zylinderförmigen Abschnitt 66 über, welcher einen Durchmesser von 2 mm aufweist und sich bis in den Uebergangsbereich vom zylinderförmigen Abschnitt 48 in die Angussöffnung 50 an der Aussenform 52 erstreckt und dort eine Stirnfläche 68 bildet. Zwischen dem zylinderförmigen Abschnitt 66 am Kern 60 und den erst kegelförmigen dann zylinderförmigen Abschnitten 46, 48 des Düsenraumes 42 wird ein sich gegen die Angussöffnung 50 hin verjüngender kreisringförmiger Strömungsquerschnitt für PET-Material im Düsenraum 42 realisiert. Der Düsenkörper 40 ist ebenso wie der Kern 60 thermisch gut leitend mit dem Heissläuferblock des Systems verbunden und weist zusätzlich (nicht dargestellt) eine Heizung auf. Damit kann die Düse bis in den Mündungsbereich des zylindrischen Abschnittes 48 auf einer Temperatur ϑ_{H} von 250°C bis 280°C gehalten werden.

Die Aussenform 52 ist über einen Isolationszylinder 72 aus thermisch schlecht leitendem Material, wie aus rostfreiem Stahl, und über einen Zylinderluftspalt 70 zusätzlich isoliert, fest mit dem Düsenkörper 40 verbunden. Durch ein Kühlleitungssystem 74 für Kühlwasser kann die Aussenform 52 mit ihrer Angussöffnung 50 auf einer Temperatur ϑ_{T} von 5°C bis 10°C gehalten werden.

Im Ausmündungsbereich der Düse, d.h. unmittelbar anschliessend an den zylinderförmigen Abschnitt 48 ist zwischen Aussenform 52 und der Wandung des Düsenkörpers 40 ein sich radial nach aussen erstreckender, scheibenförmiger Spalt 76 vorgesehen, welcher einerseits mit dem Strömungskanal für das Material durch einen Abstandsschlitz 78 zwischen Düsenmündung und Aussenform 52 kommuniziert, und andererseits mit dem zylinderförmigen Isolationsschlitz 70 kommuniziert, und welcher Abstandsschlitz 78 je nach Temperatur eine Schlitzbreite von 0,24 mm bis 0,5 mm aufweist. Im Betrieb fliesst durch den Abstandsschlitz 78 radial PET-Material in den Spalt 76 ein, wodurch wegen der schlechten Wärmeleitfähigkeit dieses Materials eine zusätzliche Isolation zwischen Mündungsbereich des Düsenkörpers 40 und Angussöffnungsbereich in der Aussenform 52 sichergestellt wird. Mit dieser Ausführungsvariante des erfindungsgemässen Anguss-Systems wurden Formlinge gemäss Fig. 3b realisiert, bei denen im weiteren die axiale Ausdehnung der Angussbüchse 41 gleich oder kleiner ist als ihr Aussendurchmesser. Damit wird eine Angussbüchse realisiert, deren separates Abtragen sich in vielen Anwendungsfällen für den Formling 29 bzw. den Vorformling 29 erübrigt.

Im folgenden soll die Funktionsweise einer bevorzugten und erprobten Ausführungsform des erfindungsgemässen Anguss-Systems näher erläutert werden.

Wegen des hohen Kristallit-Schmelztemperaturbereichs des Polyethylenterephthalats wird vorerst der Heissläuferblock und damit auch der Düsenkörper 40 und der damit starr befestigte Kern 60 auf eine Temperatur ϑ_{H} von 265°C bis 285°C gebracht. Um Sphärolithbildungen und damit eine milchige Trübung des Erzeugnisse zu vermeiden, muss die Schmelze von ihrer hohen Verarbeitungstemperatur ϑ_{H} bis unter die Minimumtemperatur für die Kristallisation bei Erwärmung T_{CH} oder nahe an die Glastemperatur T_{G} von ca. 80°C forciert abgekühlt werden.

Dazu wird die Aussenform 52 sowie der Kern 9 der Innenform mittels des Kühlleitungssystems 74 auf eine Temperatur ϑ_{T} von 5°C bis 8°C gebracht. Vorzugsweise wird die gesamte Spritzgiessanlage in einem klimatisierten Raum betrieben. In einer ersten Phase fliesst die in Heissläuferblocks angeführte Polyethylenterephthalatmasse in den Düsenraum 42 und den heissen Düsenraum- und Düsenkernwandungen entlang in die kalte Form. Die Füllzeit beträgt dabei je nach Förderdruck, -temperatur und Forminhalt 2 bis 6 Sekunden. In einer zweiten Phase wird der Förderdruck während weiteren 6 bis 7 Sekunden auf 800 bar bis 1200 bar, vorzugsweise auf 900 bar, erhöht, um den Volumenschwund der erkaltenden Masse zu, kompensieren. In einer dritten Phase, auch Haltephase genannt, wird der erhöhte Druck von vorzugsweise 900 bar für weitere vorzugsweise 4 bis 6 Sekunden beibehalten, damit sich das PET-Material in der Form weiter abkühlen und verfestigen kann. In einer vierten Phase wird wiederum während mehreren Sekunden das Material druckentlastet, um zu verhindern, dass nach dem Abtrennen des Formlings heisses PET aus der Düse fliesst und zu ermöglichen dass sich das Material in der Form während dieser Zeit weiter abkühlen und verfestigen kann. Dazu muss sogar wegen der Eigenelastizität des PET-Materials an der Zufuhrseite ein leichter Unterdruck erzeugt werden. Die mit der erfindungsgemässen und erprobten Anlage erzeugten Formlinge (48 g) weisen eine Toleranz von 0,15 bis 0,2 g auf.

Ein wichtiger Punkt für das erfindungsgemässe Verfahren und das erfindungsgemässe Anguss-System besteht darin, dass die Abkühlzeit der Formmasse die für die eine Trübung verursachende Sphärolithbildung benötigte Zeit nicht überschreitet. Da aber nach der Einfüllphase die Fliessgeschwindigkeit der PET-Masse in der Zone zwischen der heissen Masse und der unter die Glastemperatur abgekühlten Masse sehr verlangsamt ist, besteht während der zweiten Phase die Gefahr, dass Anteile des PET in diesem Temperaturbereich solange verbleiben, dass sich genügend Sphärolithe bilden können und damit milchige Trübungen verursachen.

Die Bildung dieser Trübungen wird erfindungsgemäss dadurch vermieden, dass die für die Sphärolithbildung kritische Zone minimalisiert wird. Insbesondere wird dadurch dass in den scheibenförmigen Spalt 76 resp. den Abstandsschlitz 78 zwischen Düsenmündung und Aussenform PET eindringen kann, die schlechte Wärmeleitfähgikeit des Materials benutzt, um eine gute Wärmeisolation zwischen Aussenform 52 und Düsenkörper 40 zu erreichen und somit den Temperaturgradienten zu erhöhen.

Ein weiterer wichtiger Punkt ist die Verwendung eines heissen Düsenkerns 60, welcher wegen der schlechten Wärmeleitfähigkeit des PET sicherstellt, dass das Material im Kernbereich des Anspritzstrangs an der Angussöffnung 50 nicht kühler ist als das Material im Randbereich dieses Anspritzstrangs. Insbesondere wurde in der erprobten Ausführungsform ein Düsenkern 60 aus einer Kupferlegierung verwendet.

Eine weitere wichtige Massnahme zur Minimalisierung der Zone in welcher die Kunststoff-Formmasse eine Temperatur aufweist bei welcher sie zu kristallisieren beginnt, besteht darin, die Angussöffnung zum Formraum hin aufzuweiten.

Es versteht sich für den Fachmann auf dem Gebiet der Kunststofftechnik von selbst, die oben beschriebene Ausführungsform bezüglich seiner Geometrie, Materialwahl und Dimensionierung für spezifische PET-Massen und spezifische Formen zu optimieren. Insbesondere sind auch in ihrem Querschnitt sternförmige Konfigurationen der Düsenmündung, die Verwendung von Keramik oder Titanlegierungen denkbar. Jedenfalls wird der Fachmann die Materialparameter und das materialabhängige Verhalten bei der Optimierung der Geometrie des Anguss-Systems berücksichtigen.

Es versteht sich von selbst, dass das erfindungsgemässe Verfahren und das entsprechende Anguss-System auf alle thermoplastischen Polymermassen mit hoher Kristallisationsneigung, d.h. kristallisierbare Kunststoff-Massen, angewendet werden kann.

## Patentansprüche

1. Verfahren zum Spritzgiessen von zum Blasrecken geeigneten Vorformlingen, bei welchem eine auf eine Temperatur T_{H} im Bereich der Kristallit-Schmelztemperatur T_{M} erhitzte PET-artige Kunststoff-Formmasse auf eine Temperatur T_{T} im Bereich der Glasübergangstemperatur T_{G} abgeschreckt wird, indem die erhitzte Kunststoff-Formmasse aus einer heissen Spritzdüse durch eine Angussöffnung in eine kalte Form gepresst wird, dadurch gekennzeichnet, dass die gesamte erhitzte Kunststoff-Formmasse in der Spritzgussdüse während eines Arbeitszyklus, in welchem der Formling gebildet und entnommen wird, bis in den Raum der Angussöffnung auf einer Temperatur T_{H} gehalten wird, welche oberhalb der Temperatur T_{CC} ist, unterhalb welcher die Formmasse zu kristallisieren beginnt,
dass die Zone der Kunststoff-Formmasse, in welcher diese Kunststoff-Formmasse eine Temperatur aufweist bei welcher sie zu kristallisieren beginnt durch ein Anguss-System, welches den Temperaturgradienten der Formmasse in dieser Zone erhöht, minimalisiert wird, so dass die Abkühlzeit der Formmasse die für die eine Trübung verursachende Sphärolithbildung benötigte Zeit nicht überschreitet.

2. Verfahren nach Anspruch 1, dadurch gekennzeichnet, dass während eines ersten Teils des Arbeitszyklus die erhitzte Kunststoff-Formmasse in einer ersten Phase in den Formraum gefüllt wird, in einer zweiten Phase unter erhöhtem Druck in den Formraum gepresst wird, in einer dritten Phase unter Beibehaltung des erhöhten Drucks im Formraum gehalten wird und in einer vierten druckentlasteten Phase im Formraum zur Abkühlung belassen wird, und dass während eines zweiten Teils des Arbeitszyklus der während des ersten Teils gebildete Formling in üblicher Weise dem Formraum entnommen wird.

3. Verfahren nach Anspruch 2, dadurch gekennzeichnet, dass als Formmasse Polyethylenterephtalat (PET) verwendet wird.

4. Verfahren nach Anspruch 3, dadurch gekennzeichnet, dass die Temperatur T_{H} im Bereich der Kristallit-Schmelztemperatur T_{M} oberhalb der Temperatur T_{CC} ist, unterhalb welcher das PET zu kristallisieren beginnt, und dass die Temperatur T_{T} im Bereich der Glasübergangstemperatur T_{G} unterhalb der Temperatur T_{CH} ist, oberhalb welcher das PET zu kristallisieren beginnt.

5. Anguss-System für ein Verfahren nach Anspruch 1 zum Spritzgiessen von zum Blasrecken geeigneten Vorformlingen, aus abgeschreckten PET-artigen Kunststoff-Formmassen, mit einer heizbaren Düse, bestehend aus Düsenkörper (40) und Düsenspitze, deren Düsenraum (42) in Fliessrichtung einen ersten zylinderförmigen Abschnitt (44) und einen daran anschliessenden kegelförmigen Abschnitt (46) aufweist, welche Düsenspitze eine Düsenmündung (48) aufweist, und mit einem einen Formraum (15) bildenden kühlbaren Formkörper, bestehend aus Aussenform (52) und Innenform (9), welche Aussenform (52) eine Angussöffnung (50) aufweist, wobei die Düsenmündung (48) und die Angussöffnung (50) im wesentlichen miteinander fluchten, wobei die Düse im Innen des Düsenkörpers (40) einen festen, zentrisch angeordneten Düsenkern (60) mit einem sich kegelförmig verjüngenden Abschnitt (64) aufweist und mindestens die Düsenspitze als auch der Düsenkern (60) eine hohe Wärmeleitfähigkeit aufweisen und mit Wärmequellen verbunden sind, mindestens der in unmittelbarer Nähe der Angussöffnung (50) liegende Bereich der Aussenform (52) eine hohe Wärmeleitfähigkeit aufweist und mit Wärmesenken (74) verbunden ist,
und die Angussöffnung (50) sich zur Aussenformfläche (54) der Aussenform (52) aufweitet, dadurch gekennzeichnet, dass
die Düsenspitze und die Aussenform (52) durch einen ringförmigen Spalt (78) voneinander beabstandet und thermisch isoliert sind,
und der sich kegelförmig verjüngende Abschnitt (64) des Düsenkern (60) in einen zylinderförmigen Abschnitt (66) übergeht, welcher sich bis in die Angussöffnung (50) erstreckt, ohne diese zu verschliessen, und dadurch zwischen dem zylinderförmigen Abschnitt (66) des Kerns (60) und dem kegelförmigen Abschnitt (46) der Düsenspitze ein sich gegen die Angussöffnung (50) hin verjüngender kreisringförmiger Düsenraum (42) gebildet ist.

6. Anguss-System nach Anspruch 5, dadurch gekennzeichnet, dass mindestens der Düsenkern (60) und die Düsenspitze sowie der in unmittelbarer Nähe der Angussöffnung (50) liegende Bereich der Aussenform (52) aus einer Kupferlegierung besteht.

7. Anguss-System nach Anspruch 5, dadurch gekennzeichnet, dass der ringförmige Spalt (78) mit einem thermisch isolierenden Material, insbesondere mit PET, angefüllt ist.

8. Vorformling, hergestellt nach dem Verfahren gemäss Anspruch 1, aus PET, dadurch gekennzeichnet, dass die Wandung des Formlings im Angussbereich nicht kristallin ist.

## Claims

1. Process for injection moulding preforms suitable for orientation blow moulding, wherein a PET type plastics moulding material heated to a temperature T_{H} in the region of the crystallite melting temperature T_{M} is quenched to a temperature T_{T} in the region of the glass transition temperature T_{G} by forcing the heated plastics moulding material from a hot injection nozzle through a gate opening into a cold mould,
characterised in that
- during an operating cycle in which the moulded product is formed and removed the whole of the heated plastics moulding material in the injection moulding nozzle, as far as into the cavity of the gate opening, is kept at a temperature T_{H} which is above the temperature T_{CC} below which the moulding material begins to crystallise,
- the zone of the plastics moulding material in which this plastics moulding material is at a temperature in which it begins to crystallise is minimised by means of a gating system which increases the temperature gradients of the moulding material in this zone, so that the cooling time of the moulding material does not exceed the time required for a haze-causing spherulite formation.

2. Process according to claim 1, characterised in that during a first part of the working cycle the heated plastics moulding material in a first phase is filled into the mould cavity, in a second phase is forced into the mould cavity under increased pressure, in a third phase is held in the mould cavity while maintaining the increased pressure, and in a fourth, pressure-relieved, phase is left in the mould cavity for cooling, and that during a second part of the working cycle the moulded product formed in the first part is removed from the mould cavity in the usual way.

3. Process according to claim 2, characterised in that polyethylene terephthalate (PET) is used as the moulding material.

4. Process according to claim 3, characterised in that the temperature T_{H} in the region of the crystallite melting point T_{H} is above the temperature T_{CC} below which the PET begins to crystallise, and that the temperature T_{T} in the region of the glass transition temperature T_{G} is below the temperature T_{CH} above which the PET begins to crystallise.

5. Gating system for a process according to claim 1 for injection moulding of preforms, suitable for orientation blow moulding, of quenched PET type plastics moulding materials, having a heatable nozzle comprising a nozzle body (40) and a nozzle tip, of which the nozzle cavity (42) has, in the direction of flow, a first cylindrical portion (44) and an adjoining conical portion (46), said nozzle tip having a nozzle orifice (48), and having a coolable mould body forming a mould cavity (15) and comprising an outer mould (52) and an inner mould (9), said outer mould (52) having a gate opening (50), the nozzle orifice (48) and the gate opening (50) being substantially in alignment with one another, the nozzle having in the interior of the nozzle body (40) a fixed, centrally located nozzle core (60) with a conically tapering portion (64), at least the nozzle tip, as well as the nozzle core (60), having a high thermal conductivity and being connected to heat sources, at least the region of the outer mould (52) in the immediate vicinity of the gate opening (50) having a high thermal conductivity and being connected to heat sinks (74), and the gate opening (50) widening out to the outer mould surface (54) of the outer mould (52),
characterised in that
- the nozzle tip and the outer mould (52) are spaced and thermally insulated from one another by an annular gap (78), and
- the conically tapering portion (64) of the nozzle core (60) merges into a cylindrical portion (66) which extends into but does not close the gate opening (50), thereby forming, between the cylindrical portion (66) of the core (60) and the conical portion (46) of the nozzle tip, an annular nozzle cavity (42) tapering towards the gate opening (50).

6. Gating system according to claim 5, characterised in that at least the nozzle core (60) and the nozzle tip, and the region of the outer mould (52) in the immediate vicinity of the gate opening (50), consist of a copper alloy.

7. Gating system according to claim 5, characterised in that the annular gap (78) is filled with a thermally insulating material, in particular with PET.

8. Preform, made by the process of claim 1, of PET, characterised in that the wall of the moulded product is non-crystalline.

## Revendications

1. Procédé de moulage par injection de préformes appropriées pour le soufflage, dans lequel une masse à mouler en matière plastique du type PET chauffée à une température T_{H} située dans la région de la température T_{M} de fusion de la cristallite, est refroidie brusquement à une température T_{T} située dans la région de la température de transition vitreuse T_{G}, dans lequel la masse à mouler en matière plastique chauffée est injectée au sortir d'une buse d'injection chaude dans un moule froid à travers une ouverture d'injection, caractérisé en ce que la totalité de la masse à mouler en matière plastique chauffée contenue dans la buse d'injection est maintenue à une température T_{H} qui est supérieure à la température T_{CC} au-dessous de laquelle la masse à mouler commence à cristalliser, pendant un cycle de travail dans lequel la pièce moulée est formée et démoulée, et ceci jusque dans la région de l'ouverture d'injection,
en ce que la zone de la masse à mouler en matière plastique dans laquelle cette masse à mouler en matière plastique présente une température à laquelle elle commence à cristalliser est réduite à un minimum par un système d'injection qui accroît le gradient de température de la masse à mouler dans cette zone, de sorte que le temps de refroidissement de la masse à mouler n'excède pas le temps nécessaire pour une formation de sphérolithes qui donnent naissance à un voile.

2. Procédé selon la revendication 1, caractérisé en ce que, pendant une première partie du cycle de travail, la masse à mouler en matière plastique chauffée est introduite dans l'empreinte du moule dans une première phase, puis comprimée dans l'empreinte du moule sous une pression plus élevée dans une deuxième phase, puis maintenue avec conservation de la pression plus élevée dans une troisième phase, puis laissée libre de se refroidir dans l'empreinte du moule dans une quatrième phase comportant un relâchement de la pression, et en ce que, pendant une deuxième partie du cycle de travail, la pièce moulée formée pendant la première partie est extraite de l'empreinte du moule de la façon habituelle.

3. Procédé selon la revendication 2, caractérisé en ce qu'on utilise comme masse à mouler du polytéréphtalate d'éthylène (PET).

4. Procédé selon la revendication 3, caractérisé en ce que la température T_{H} située dans la région de la température de fusion de la cristallite T_{M} est supérieure à la température T_{CC} au-dessous de laquelle le PET commence à cristalliser et en ce que la température T_{T} contenue dans l'intervalle de la température de transition vitreuse T_{G} est inférieure à la température T_{CH} au-dessus de laquelle le PET commence à cristalliser.

5. Système d'injection pour un procédé selon la revendication 1 de moulage par injection de préformes appropriées pour le soufflage, faites à partir d'une masse à mouler en matière plastique du genre du PET et refroidies brusquement, comprenant une buse pouvant être chauffée, composée d'un corps de buse (40) et d'une pointe de buse, dont la chambre (42) de buse présente successivement, dans le sens de l'écoulement, un premier segment cylindrique (44) et un segment conique (46) qui y fait suite, laquelle pointe de buse présente un débouché de buse (48), et un corps de moule pouvant être refroidi, qui forme une empreinte (15) de moule, et qui est composé d'un moule extérieur (52) et d'un moule intérieur (9), lequel moule extérieur (52) présente une ouverture d'injection (50), le débouché (48) de la buse et l'ouverture d'injection (50) étant sensiblement alignés, la buse présentant, à l'intérieur du corps (40) de buse, un noyau fixe (60) de buse, placé en position centrale, et qui comprend un segment (64) qui se rétrécit en cône, et au moins la pointe de buse ainsi que le noyau (60) de buse présentant une haute conductibilité thermique et étant reliés à une source de chaleur, au moins la région du moule extérieur (52) qui se trouve à proximité immédiate de l'ouverture d'injection (50) possédant une haute conductibilité thermique et étant reliée à des puits de chaleur (74), et l'ouverture d'injection (50) s'évase en direction de la surface extérieure de moulage (54) du moule extérieur (52), caractérisé en ce que
la pointe de buse et le moule extérieur (52) sont séparés l'un de l'autre par une fente annulaire (78) et isolés thermiquement l'un de l'autre, et le segment (64) du noyau (60) de buse qui se rétrécit en cône se raccorde à un segment cylindrique (66) qui s'étend jusque dans l'ouverture d'injection (50) sans fermer cette dernière, de sorte qu'il se forme, entre le segment cylindrique (66) du noyau (60) et le segment conique (46) de la pointe de buse, une chambre (42) de buse ayant la forme d'une couronne de cercle et qui se rétrécit en direction de l'ouverture d'injection.

6. Système d'injection selon la revendication 5, caractérisé en ce qu'au moins le noyau (60) de buse et la pointe de buse, ainsi que la région du moule extérieur (52) qui se trouve à proximité immédiate de l'ouverture d'injection sont composés d'un alliage de cuivre.

7. Système d'injection selon la revendication 5, caractérisé en ce que la fente annulaire (58) est remplie d'une matière isolante de la chaleur, notamment de PET.

8. Préforme fabriquée par le procédé selon la revendication 1, en PET, caractérisée en ce que la paroi de la pièce moulée n'est pas cristalline dans la région de l'injection.
